# EUROPÄISCHE PATENTSCHRIFT

(11) **EP 3 351 501 B1**
(45) Veröffentlichungstag und Bekanntmachung des Hinweises auf die Patenterteilung: **26.04.2023**
(21) Anmeldenummer: 18152146.9
(22) Anmeldetag: 17.01.2018
(51) Int. Cl.: B66D 3/18, B66C 23/00, B66C 13/18

(54) **HANDHABUNGSVORRICHTUNG UND VERFAHREN ZUM BETREIBEN EINER HANDHABUNGSVORRICHTUNG**
HANDLING DEVICE AND METHOD FOR OPERATING SAME
DISPOSITIF DE MANIPULATION ET PROCÉDÉ DE FONCTIONNEMENT D'UN DISPOSITIF DE MANIPULATION

(30) Priorität: 18.01.2017 DE 102017100883
(43) Veröffentlichungstag der Anmeldung: 25.07.2018
(73) Patentinhaber: J. Schmalz GmbH, 72293 Glatten (DE)
(72) Erfinder: Schwabenthan, Klaus-Dieter, 72336 Balingen (DE); Mast, Jonas, 72270 Baiersbronn (DE); Heinzmann, Bernd, 72290 Loßburg (DE); Schaaf, Walter, 72250 Freudenstadt-Grüntal (DE); Defranceski, Aline, 72160 Horb a.N. (DE)
(74) Vertreter: DREISS Patentanwälte PartG mbB

(56) Entgegenhaltungen:
- EP-A1- 2 247 415
- DE-A1-102007 042 247
- GB-A- 2 475 193
- US-A- 5 116 180
- US-A1- 2014 107 843

## Beschreibung

Die Erfindung betrifft eine Handhabungsvorrichtung zur Handhabung eines Gegenstands mittels manueller Steuerung der Handhabungsvorrichtung durch eine Bedienperson, mit einer Sensoreinrichtung und einer Auswerteeinrichtung. Zudem betrifft die Erfindung ein Verfahren zum Betreiben einer Handhabungsvorrichtung zur Handhabung eines Gegenstands mittels manueller Steuerung durch eine Bedienperson.

Handhabungsvorrichtungen zur Handhabung eines Gegenstands und Verfahren zum Betreiben einer Handhabungsvorrichtung sind aus dem Stand der Technik bekannt. Beispielsweise zeigt die DE 101 51 883 B4 eine Unterdruckhandhabungseinrichtung, mit der eine Bedienperson auch schwere Gegenstände aufnehmen, transportieren und an einem Zielort ablegen kann. Allerdings besteht Raum für Optimierungen. So ist durch diese Einrichtung zwar eine Hebehilfe für eine Bedienperson geschaffen, jedoch muss die Bedienperson den Handhabungsvorgang alleine koordinieren und die Handhabungsvorrichtung steuern. Dies stellt eine Belastung für die Bedienperson dar.

Die WO 2009/106983 A1 beschreibt eine Handhabungsvorrichtung, welche durch Krafteinwirkung auf einen Bediengriff geführt wird, wobei durch Aktuatoren eine Rückkopplung in Form einer Kraft auf den Bediengriff gegeben werden kann. DE 10 2007 042 247 A1 beschreibt einen kraftgeführten Knickarmmanipulator.

Handhabungsvorrichtungen mit haptischer Rückkopplung auf ein Bedienelement sind z.B. in US 5,116,180 B oder GB 2475193 A beschrieben.

Der Erfindung liegt die Aufgabe zugrunde, die Handhabung von Gegenständen mit einer Handhabungsvorrichtung weiter zu vereinfachen, insbesondere eine Bedienperson individuell und anwendungsabhängig zu unterstützen.

Die Erfindung löst die Aufgabe mit einer Handhabungsvorrichtung mit den Merkmalen des Anspruchs 1. Danach zeichnet sich die Handhabungsvorrichtung dadurch aus, dass die Sensoreinrichtung Sensoren zur Erfassung der Position der Handhabungsvorrichtung und von Bewegungsdaten der Handhabungsvorrichtung in Form von Messwerten aufweist, dass die Auswerteeinrichtung dazu eingerichtet ist, durch Auswertung der erfassten Messwerte Handlungsanweisungen für die Bedienperson zu erzeugen und dass eine Ausgabeeinrichtung zur Ausgabe der Handlungsanweisungen an die Bedienperson vorgesehen ist.

Auf diese Weise wird die Handhabung von Gegenständen erleichtert, da insbesondere individuell auf die Handhabung oder die Bedienperson bezogene Handlungsanweisungen und/oder handhabungsbezogene Informationen ausgegeben werden, die zur Unterstützung und Führung der Bedienperson bei der Steuerung der Handhabungsvorrichtung dienen. Durch Ausgabe der Handlungsanweisungen und/oder handhabungsbezogenen Informationen können die richtige Zuordnung und die korrekte Handhabung eines Gegenstands sichergestellt werden. Die Bedienperson erhält gezielt Informationen zu einem aktuellen Handhabungsvorgang, beispielsweise die Angabe eines Zielorts, eines Bewegungsablaufs, einer Handhabungsgeschwindigkeit oder einer Belastungswarnung. Die Gefahr von Schäden auf Grund falscher Handhabung oder Mehrarbeit auf Grund falscher Zuordnung ist hiermit reduziert. Die Handhabung eines Gegenstands kann effizient und in vergleichsweise kurzer Zeit erledigt werden. Eine Unterstützung findet individuell statt, wobei auch körperlich beeinträchtigte Personen unterstützt werden können. Auf Grund dieser Unterstützung tritt bei der Bedienperson weniger schnell Ermüdung ein. Zudem ist die Gefahr von Unfällen und Schäden reduziert.

Bei den erfassten Messwerten handelt es sich insbesondere um die Position in einem Bezugssystem (Erfassung von Koordinaten) und um Bewegungsdaten, insbesondere Geschwindigkeitsvektor und Beschleunigungsvektor, der Handhabungsvorrichtung oder eines Abschnitts der Handhabungsvorrichtung, beispielsweise einem Bediengriff. Die Sensoren der Sensoreinrichtung können als GPS-Sensor, als optischer Sensor (z.B. Kamera mit Bildkorrelation), Wegmesssensor (z.B. Potentiometer) oder Beschleunigungssensor ausgebildet sein. Die Sensoren können an der Handhabungsvorrichtung oder einem Abschnitt der Handhabungsvorrichtung, insbesondere an einem Bediengriff, angeordnet sein. Die Sensoren können über eine drahtlose oder eine drahtgebundene Verbindung mit der Sensoreinrichtung verbunden sein.

Unter einer Handhabung sind eine Aufnahme oder ein Greifen eines Gegenstands an einem Aufnahmeort, ein Transportieren des Gegenstands von dem Aufnahmeort an einen Zielort und eine Abgabe oder ein Ablegen des Gegenstands am Zielort zu verstehen. Bei der Handhabungsvorrichtung kann es sich um einen Kran, ein Gepäcktransportband, einen Schlauchheber oder eine sonstige manuell geführte Vorrichtung zur Handhabungsunterstützung handeln.

Die Ausgabeeinrichtung weist ein Anzeigeelement zur Darstellung der Handlungsanweisungen und/oder handlungsbezogenen Informationen auf. Somit können Sensorwerte, Zustände und/oder Hinweise unabhängig von etwaigen Umgebungsgeräuschen zuverlässig ausgegeben werden. Dies kann über eine oder mehrere Leuchteinrichtungen erfolgen, beispielsweise über ein oder mehrere LEDs oder ein Display. Denkbar ist zudem, dass über die Leuchteinrichtung Lichtimpulse ausgegeben werden.

Die Ausgabeeinrichtung ist zur Ausgabe der Handlungsanweisungen und/oder handhabungsbezogenen Informationen in Form optischer Signale eingerichtet. Hiermit können über einen oder mehrere geeignete Kanäle entsprechende Signale ausgegeben werden. Wichtige Signale oder Warnsignale können über mehrere oder alle Kanäle ausgegeben werden, insbesondere nach einem Ausbleiben eines Handlungs- oder Bestätigungsschrittes durch die Bedienperson auf ein vorheriges Signal hin.

Die Ausgabeeinrichtung kann an der Handhabungsvorrichtung angeordnet sein, beispielsweise unmittelbar an der Handhabungsvorrichtung befestigt sein. Dadurch können Handlungsanweisungen und/oder handhabungsbezogene Informationen direkt an der Handhabungsvorrichtung ausgegeben werden, so dass deren Zuordnung zur Handhabungsvorrichtung unabhängig von der tatsächlichen Bedienperson sichergestellt ist. Im Konkreten kann die Ausgabeeinrichtung an einem Hebezeug oder einem Bediengriff der Handhabungsvorrichtung angeordnet und/oder befestigt sein.

Alternativ oder ergänzend kann die Ausgabeeinrichtung als körpergetragene Ausgabeeinrichtung zum Tragen am Körper der Bedienperson ausgebildet sein. So ist eine zuverlässige Signalausgabe an die Bedienperson ermöglicht, und zwar auch dann, wenn die Bedienperson nicht in unmittelbarer Nähe oder in unmittelbarem Kontakt mit der Handhabungsvorrichtung ist. Die körpergetragene Ausgabeeinrichtung kann durch ein Armband, eine Smartwatch, ein Smartphone, einen Kopfhörer oder einen akustischen Ohrhörer (In-Ear) realisiert sein. Für eine besonders zuverlässige Signalausgabe ist eine Ausgabeeinrichtung mit einer Ausgabeeinheit an der Handhabungsvorrichtung und einer körpergetragenen Ausgabeeinheit zum Tragen am Körper einer Bedienperson denkbar.

In vorteilhafter Weise kann mindestens eine Antriebseinrichtung zur Regulierung der Bewegungs- und/oder Reaktionsgeschwindigkeit einer Handhabung vorgesehen sein.

Die Antriebseinrichtung wirkt auf die Handhabungsvorrichtung und ist derart ausgebildet, dass die Handhabungsvorrichtung nicht nur angetrieben, sondern auch verzögert werden kann. Hiermit kann eine Handhabung, beispielsweise ein Transportieren des Gegenstands von einem Aufnahmeort an einen Zielort ganz gezielt unterstützt und reguliert werden. Beispielsweise können ungleichmäßige Bewegungen einer körperlich beeinträchtigten Bedienperson ausgeglichen ("geglättet") oder plötzliche Bewegungen verzögert werden (Abbremsen).

Im Rahmen einer bevorzugten Ausgestaltung kann eine Identifikationseinrichtung vorgesehen sein, die zur Identifikation der Bedienperson und/oder des handzuhabenden Gegenstands eingerichtet ist. Somit lassen sich Informationen über Eigenschaften eines handzuhabenden Gegenstands (richtige Zuordnung, Größe, Gewicht, Zerbrechlichkeit, Aufnahmeort und/oder Zielort) und/oder einer Bedienperson (Größe, Gewicht, etc.) gewinnen, verarbeiten und bei der Handhabung berücksichtigen. Die Identifikationseinrichtung kann zur Identifikation mittels RFID, einem mobilen Endgerät (z.B. Smartphone), einem QR-Code, Barcodes, einer Nutzerkennung (Angabe Nutzername und Passwort an der Handhabungsvorrichtung) oder sonstigen Codes eingerichtet sein. Die Identifikationseinrichtung kann hierfür erforderliche Sensoren, Eingabeeinrichtungen und/oder Kommunikationselemente aufweisen.

Alternativ oder ergänzend zu an der Handhabungsvorrichtung angeordneten Sensoren können die Sensoren der Sensoreinrichtung als externe Sensoren ausgebildet und in der Umgebung der Handhabungsvorrichtung angeordnet sein, beispielsweise in einem Raum, in dem die Handhabungsvorrichtung angeordnet ist. Somit ist eine konstruktiv günstige Bauweise erreicht, bei der die Handhabungsvorrichtung durch die Sensoren baulich und im Gewicht nicht beeinträchtigt wird. Zudem ist ein universeller Einsatz der Sensoren ermöglicht, da diese durch mehrere Handhabungsvorrichtungen genutzt werden können. Die externen Sensoren können als Lichtschranke, GPS-Sensor, Beschleunigungssensor, Näherungsschalter oder als Bewegungserfassungseinrichtung umfassend mindestens eine Kamera und eine Bildverarbeitungseinrichtung (z.B. Computer, Tablet, Smartphone) ausgebildet sein. Zudem können die Sensoren über eine kabellose oder eine kabelgebundene Verbindung mit der Sensoreinrichtung verbunden sein. Für eine besonders genaue und/oder redundante Erfassung der Position und der Bewegungsdaten der Handhabungsvorrichtung ist auch eine Kombination von an der Handhabungsvorrichtung angeordneten und in der Umgebung der Handhabungsvorrichtung angeordneten Sensoren denkbar.

Die eingangs genannte Aufgabe wird auch durch ein Verfahren zum Betreiben einer Handhabungsvorrichtung zur Handhabung eines Gegenstands mittels manueller Steuerung durch eine Bedienperson gelöst. Dieses Verfahren zeichnet sich durch folgende Schritte aus:
- Erfassung der Position der Handhabungsvorrichtung und von Bewegungsdaten der Handhabungsvorrichtung in Form von Messwerten (insbesondere mittels der Sensoreinrichtung),
- Ermittlung von Handlungsanweisungen und/oder handhabungsbezogenen Informationen durch eine Auswertung der erfassten Messwerte (insbesondere mittels der Auswerteeinrichtung), und
- Ausgabe der Handlungsanweisungen und/oder handhabungsbezogenen Informationen an die Bedienperson (insbesondere mittels der Ausgabeeinrichtung).

Hinsichtlich der mit dem Verfahren erzielbaren Vorteile wird auf die Ausführungen zur voranstehend beschriebenen Handhabungsvorrichtung verwiesen.

Im Rahmen einer bevorzugten Ausgestaltung kann vor oder während der Handhabung der zu handhabende Gegenstand und/oder die Bedienperson identifiziert werden. Hieraus lassen sich individuell an den handzuhabenden Gegenstand und/oder die Bedienperson angepasste Betriebsparameter der Handhabungsvorrichtung (z.B. Verfahrgeschwindigkeiten, Grad der Kraftunterstützung, etc.) ermitteln, beispielsweise durch die Auswerteeinrichtung. Somit lassen sich Informationen über Eigenschaften eines handzuhabenden Gegenstands (richtige Zuordnung, Größe, Gewicht, Zerbrechlichkeit, Aufnahmeort und/oder Zielort) und/oder einer Bedienperson (Größe, Gewicht, etc.) gewinnen, verarbeiten und bei der Handhabung berücksichtigen (Betriebsparameter). Dies trägt dazu bei, dass der richtige Gegenstand auf richtige Weise an den richtigen Zielort transportiert werden kann. Beispielsweise kann beim Palettieren ein richtiger Aufbau von Lagen (Gegenständen) erfolgen. Auch ein richtiges Depalettieren und Verteilen von Gegenständen auf unterschiedliche Bänder (Zielort) kann sichergestellt werden. Das Risiko falscher Konfektionierung oder Sortierung von Gegenständen ist hiermit reduziert.

Die Identifikation kann mittels der Handhabungsvorrichtung, insbesondere mittels der Identifikationseinrichtung der Handhabungsvorrichtung, beispielsweise mittels RFID, QR-Codes, Barcodes oder einer Nutzerkennung (Nutzername und Passwort) erfolgen. Auch kann eine manuelle Identifikation durch die Bedienperson erfolgen. Infolge der Kenntnis von Eigenschaften der Bedienperson kann die Handhabungsvorrichtung auf die Bedienperson eingestellt werden, beispielsweise durch Einstellung der Arbeitshöhe, von Griffpositionen oder Maximalwerten bei der Bewegung der Handhabungsvorrichtung. Zudem können einzuhaltende Belastungsgrenzwerte vorgegeben werden. Aus ergonomischen oder gesundheitlichen Aspekten kann angepasst an die Bedienperson eine gezielte Kraftunterstützung erfolgen oder spezielle Bewegungen oder Beschleunigungen können eingeschränkt werden. Alternativ oder ergänzend können diese Informationen angezeigt werden, beispielsweise mittels der Ausgabeeinrichtung.

Es wird eine optimale Bewegungsbahn für die Handhabung des Gegenstands ausgegeben und/oder optimale Bedienbefehle vorgegeben. Durch Vorgabe der optimalen Bewegungsbahn kann der Gegenstand beispielsweise auf kürzestem oder für die Handhabung einfachsten Weg zum Zielort bewegt werden, so dass die Handhabung erleichtert und beschleunigt ist. Die optimale Bewegungsbahn kann beispielsweise durch einen optischen Richtungsvektor ausgegeben werden, insbesondere an der Ausgabeeinrichtung. Die Bewegungsbahn und/oder die Bedienbefehle können mithilfe der Handlungsanweisungen und/oder handhabungsbezogenen Informationen oder anhand in der Auswerteeinrichtung hinterlegter Informationen zum insbesondere identifizierten Gegenstand erfolgen. Beispielsweise kann bei zerbrechlichem Gegenstand eine Handhabung mit geringer Geschwindigkeit vorgegeben und ein Abwerfen des Gegenstands verhindert werden. Ebenso kann eine Schwenkbewegung der Handhabungsvorrichtung durch Vorgabe der Schwenkbahn unterstützt werden. Dabei kann auch eine Anpassung an die individuellen Gegebenheiten des Bedieners erfolgen, z.B. eine Handhabung als Trainingsinterval, zur Rehabilitation oder Prävention. Durch Vorgabe optimaler Bedienbefehle wird die Handhabung weiter erleichtert, da die Handhabungsvorrichtung an den handzuhabenden Gegenstand angepasst wird, beispielsweise durch abgestimmte Ansteuerung von Ventilen eines Sauggreifers, eine abgestimmte Lift-Geschwindigkeit eines Schlauchhebers oder eines Krans oder einem Verfahren der Handhabungsvorrichtung mit einer für den Gegenstand definierten Geschwindigkeit.

Zweckmäßigerweise kann anhand eines Vergleichs bereits erfasster Messwerte einer früheren Handhabung mit aktuellen Messwerten einer weiteren, insbesondere identischen, Handhabung ein Ermüdungszustand oder eine Überlastung einer Bedienperson ermittelt werden. Alternativ oder ergänzend kann anhand einer Auswertung der Anzahl an Handhabungen ein Wartungsbedarf der Handhabungsvorrichtung ermittelt werden. Hierdurch kann die Arbeitssicherheit erhöht werden. Es kann ein Vergleich aufgezeichneter Messwerte mit aktuellen Messwerten erfolgen, wobei bei Überschreiten eines Schwellwerts der Bediendauer oder eines Sensorwertes, beispielsweise einem Unterdruckwert, eine Signalausgabe erfolgt. Der Bedienperson kann damit signalisiert werden, dass diese eine Pause einlegen oder an eine andere Handhabungsvorrichtung wechseln sollte. Ebenfalls kann der Bedienperson signalisiert werden, dass ein anderes Bewegungsmuster oder Lastprofil benutzt werden sollte. Auch ein Wartungsbedarf der Handhabungsvorrichtung kann hiermit ausgegeben werden. Über Sensorwerte oder Unterdruckwerte kann die Anzahl der mit der Handhabungsvorrichtung getätigten Handhabung (Pickzahl) ermittelt und bei Überschreiten einer definierten Handhabungsanzahl ein Wartungsbedarf signalisiert werden.

Vorzugsweise können gleichartige, sich wiederholende Bewegungsprofile der Handhabungsvorrichtung erkannt und optimalere (z.B. kürzere) Bewegungsbahnen vorgeschlagen und/oder sich wiederholende Bewegungen insbesondere vorausschauend unterstützt werden (z.B. Überbrückung langer Handhabungsstrecken oder Bereiche von Feinjustage).

In vorteilhafter Weise kann die Handhabungsvorrichtung selbstlernend agieren (Selbstlernmodus). Dadurch kann die Handhabungsvorrichtung auf bekannte individuelle Belastungsprofile von Benutzern reagieren und diese überbrücken. Beispielsweise können ein Zurren und/oder ruckartige Bewegungen einer körperlich beeinträchtigten Bedienperson reduziert oder ausgeglichen werden.

Zudem ist denkbar, dass die Handhabungsvorrichtung infolge des Selbstlernmodus' Bewegungsmuster teilautonom fahren kann, beispielsweise ein Rückweg (ohne Gegenstand) nach Ablegen des Gegenstands an einem Zielort oder ein Rückkehren in eine Ruheposition.

In vorteilhafter Weise kann die Handhabungsvorrichtung Bewegungsprofile, insbesondere auch Verfahrgeschwindigkeiten, in Abhängigkeit von der Auslastung mit Handhabungsvorgängen oder der für einen Handhabungsvorgang verbleibenden Zeit anpassen oder eine solche Anpassung vorschlagen, beispielsweise durch optische und/oder akustische Signalausgabe an die Bedienperson.

Die Erfindung wird im Folgenden anhand der Figuren näher erläutert. Es zeigen:
- Figur 1: eine Ausführungsform einer Handhabungsvorrichtung in einer Seitenansicht;
- Figur 2: eine Ausführungsform einer Handhabungsvorrichtung in einer Seitenansicht;
- Figur 3: die Handhabungsvorrichtung aus Figur 1 in einer Draufsicht;

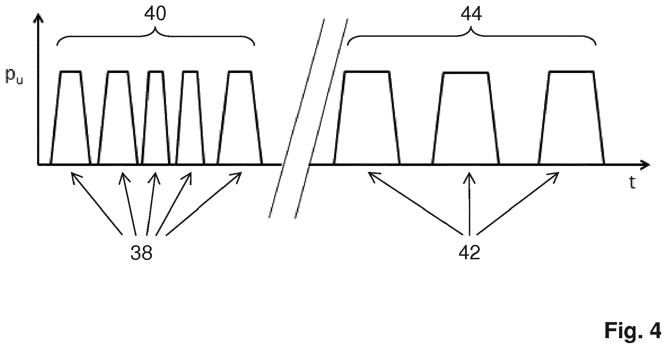

- Figur 4: Druckverläufe an der Handhabungsvorrichtung aus Figur 1 von mehreren Handhabungsvorgängen; und
- Figur 5: Druckverläufe an der Handhabungsvorrichtung aus Fig.1 von Handhabungsvorgängen unterschiedlicher Gegenstände.

In der nachfolgenden Beschreibung und in den Figuren sind für identische oder einander entsprechende Merkmale jeweils die gleichen Bezugszeichen verwendet.

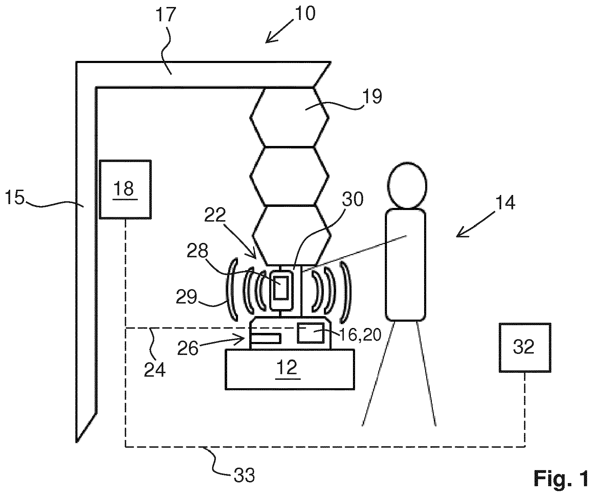

Figur 1 zeigt eine Handhabungsvorrichtung zur Handhabung eines Gegenstands 12 mittels manueller Steuerung der Handhabungsvorrichtung durch eine Bedienperson 14, wobei die Handhabungsvorrichtung insgesamt mit dem Bezugszeichen 10 bezeichnet ist.

Die Handhabungsvorrichtung 10 weist eine Sensoreinrichtung 16 und eine Auswerteeinrichtung 18 auf. Die Sensoreinrichtung 16 weist Sensoren 20 zur Erfassung der Position der Handhabungsvorrichtung 10 und von Bewegungsdaten der Handhabungsvorrichtung 10 in Form von Messwerten auf.

Die Auswerteeinrichtung 18 ist dazu eingerichtet, durch Auswertung der erfassten Messwerte Handlungsanweisungen und/oder handhabungsbezogene Informationen für die Bedienperson 14 zu erzeugen. Zudem ist eine Ausgabeeinrichtung 22 zur Ausgabe der Handlungsanweisungen und/oder handhabungsbezogenen Informationen an die Bedienperson 14 vorgesehen.

Die Sensoreinrichtung 16 und die Auswerteeinrichtung 18 sind mittels einer kabellosen oder kabelgebundenen Verbindung 24 miteinander verbunden. Die Sensoren 20 sind an der Handhabungsvorrichtung 10 angeordnet.

Die Handhabungsvorrichtung 10 ist als Schlauchheber ausgebildet. An einem Pfeiler 15 ist ein Schwenkarm 17 befestigt, an dessen freiem Ende ein Schlauch 19 angeordnet ist. Am freien Ende des Schlauchs 19 ist ein Greifer oder Sauggreifer 26 angeordnet. Die Sensoreinrichtung 16 und die Sensoren 20 sind am Greifer 26 angeordnet, so dass die Position und Bewegungsdaten des Greifers 26, insbesondere eines Bediengriffs 30 des Greifers 26, erfasst werden.

Die Ausgabeeinrichtung 22 weist ein Anzeigeelement 28 zur Darstellung der Handlungsanweisungen und/oder handhabungsbezogenen Informationen auf. Das Anzeigeelement 28 ist als Display ausgebildet. Die Ausgabeeinrichtung 22 kann zur Ausgabe der Handlungsanweisungen und/oder handhabungsbezogenen Informationen in Form optischer, akustischer und/oder haptischer Signale 29 eingerichtet sein.

Die Ausgabeeinrichtung 22 ist an der Handhabungsvorrichtung 10 angeordnet, und zwar an dem Bediengriff 30 der Handhabungsvorrichtung 10 (siehe Figur 1).

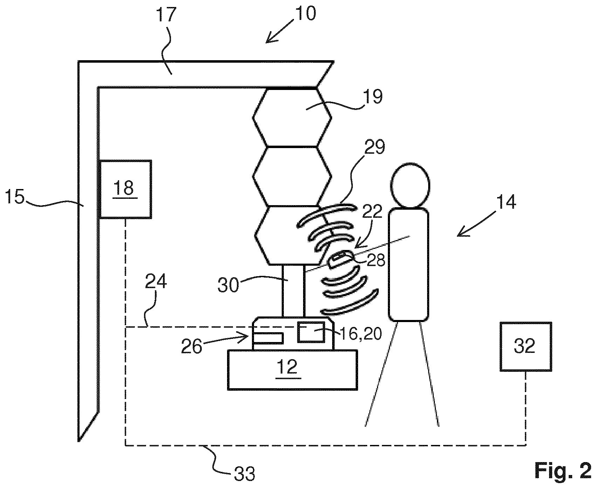

Die Ausgabeeinrichtung 22 kann auch als körpergetragene Ausgabeeinrichtung 22 zum Tragen am Körper der Bedienperson 14 ausgebildet sein (siehe Figur 2). Die Ausgabeeinrichtung 22 ist am Körper der Bedienperson 14 befestigbar oder befestigt.

Es kann eine Idenfikationseinrichtung vorgesehen sein, die zur Identifikation der Bedienperson 14 und/oder des handzuhabenden Gegenstands 12 eingerichtet ist und entsprechende Sensoren, Eingabeeinrichtungen und/oder Kommunikationselemente aufweist, wie im allgemeinen Teil beschrieben (nicht dargestellt).

Die Sensoren 20 können alternativ oder ergänzend als externe Sensoren 32 ausgebildet sein und in der Umgebung der Handhabungsvorrichtung 10 angeordnet sein. Die Sensoren 32 sind über eine kabellose oder eine kabelgebundene Verbindung 33 mit der Auswerteeinrichtung 18 verbunden.

Das Verfahren zum Betreiben einer Handhabungsvorrichtung 10 zur Handhabung eines Gegenstands 12 mittels manueller Steuerung durch eine Bedienperson 14 arbeitet folgendermaßen: Zunächst erfolgt eine Erfassung der Position der Handhabungsvorrichtung 10 und von Bewegungsdaten der Handhabungsvorrichtung 10 in Form von Messwerten, wobei vorliegend die Position und die Bewegungsdaten des Greifers 26, insbesondere des Bediengriffs 30 des Greifers 26, erfasst werden. Dies kann mittels der Sensoreinrichtung 16 erfolgen.

Anschließend erfolgt eine Ermittlung von Handlungsanweisungen und/oder handhabungsbezogenen Informationen durch eine Auswertung der erfassten Messwerte, was mittels der Auswerteeinrichtung 18 erfolgen kann. Weiter erfolgt eine Ausgabe der Handlungsanweisungen und/oder handhabungsbezogenen Informationen an die Bedienperson 14, insbesondere mittels der Ausgabeeinrichtung 22.

Vor oder während der Handhabung des Gegenstands 12 können der Gegenstand 12 und/oder die Bedienperson 14 identifiziert werden, wozu entsprechende Sensoren, Eingabeeinrichtungen und/oder Kommunikationselemente der Sensoreinrichtung 16 dienen (nicht dargestellt).

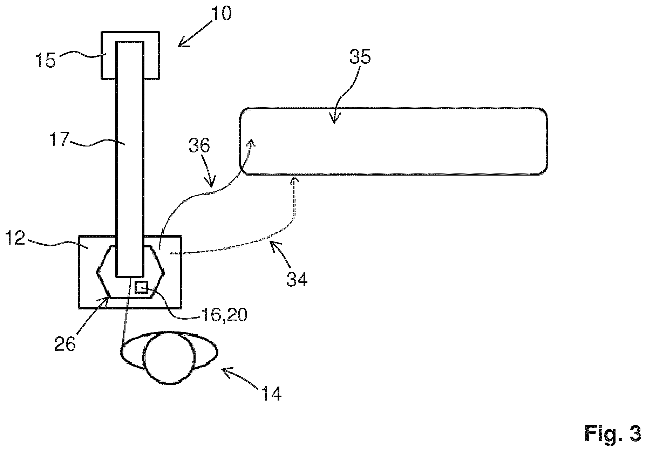

Für die Handhabung des Gegenstands 12 kann eine optimale Bewegungsbahn 34 zur Verlagerung des Gegenstands an einen Zielort 35 ausgegeben werden (siehe Figur 3), bei dem es sich um eine Ablagefläche handeln kann. Die Ausgabe der Bewegungsbahn 34 kann mittels einem auf dem Anzeigeelement 28 der Ausgabeeinrichtung 22 dargestellten Richtungsvektor erfolgen. Durch die optimale Bewegungsbahn 34 ist eine einfachere Handhabung im Vergleich zur von der Bedienperson 14 intendierten ungünstigeren Bewegungsbahn 36 erreicht.

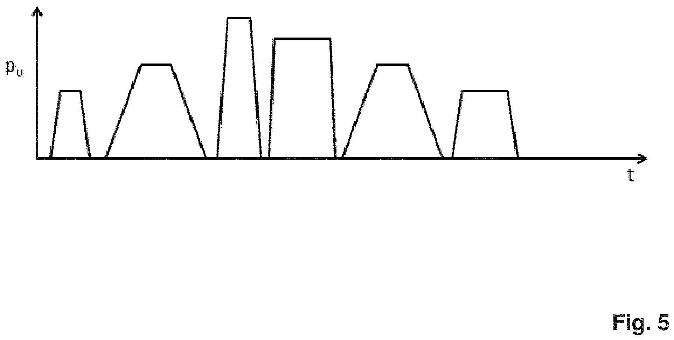

Alternativ oder ergänzend können für die Handhabung des Gegenstands 12 Bedienbefehle vorgegeben werden. Beispielsweise können Höhe und/oder Verlauf des am Greifers 26 herrschenden Unterdrucks an den handzuhabenden Gegenstand 12 angepasst werden (siehe Figur 5).

Die optimale Bewegungsbahn 34 und/oder die Bedienbefehle können mithilfe der Handlungsanweisungen, der handhabungsbezogenen Informationen und/oder anhand in der Auswerteeinrichtung 18 hinterlegter Informationen zum identifizierten Gegenstand 12 ermittelt und ausgegeben werden.

Zudem können an die Bedienperson 14 und/oder an die Handhabung des Gegenstands 12 angepasste Bewegungsprofile vorgegeben werden.

Anhand eines Vergleichs erfasster Messwerte 38 zumindest einer früheren Handhabung 40 mit aktuellen Messwerten 42 zumindest einer weiteren identischen Handhabung 44 kann ein Ermüdungs- oder Überlastungszustand der Bedienperson 12 ermittelt werden.

Bei den Messwerten 38, 42 kann es sich um am Greifer 24 erfasste Druckwerte handeln.

Beispielsweise kann die Ermüdung bei Überschreiten eines Schwellwerts in der Bedienzeit für den Handhabungsvorgang und/oder bei Überschreiten von Pausenzeiten zwischen einzelnen Handhabungen festgestellt werden. Sofern ein Schwellwert der Bediendauer bei mindestens einer Handhabung überschritten wird, kann über die Ausgabeeinrichtung 22 ein entsprechendes Signal an die Bedienperson 14 ausgegeben werden.

Anhand der Anzahl der Messwerte 38, 42 (Pickzahl) kann die Anzahl der mit der Handhabungsvorrichtung 10 durchgeführten Handhabungen ermittelt werden. Bei Überschreiten eines festgelegten Schwellwerts der Handhabungsanzahl kann über die Ausgabeeinrichtung 22 ein Signal an die Bedienperson 14 ausgegeben werden, um dieser zu signalisieren, dass die Handhabungsvorrichtung 10 gewartet werden muss.

## Patentansprüche

1. Handhabungsvorrichtung (10) zur Handhabung eines Gegenstands (12) mittels manueller Steuerung der Handhabungsvorrichtung (10) durch eine Bedienperson (14), mit einer Sensoreinrichtung (16) und einer Auswerteeinrichtung (18), wobei die Sensoreinrichtung (16) Sensoren (20) zur Erfassung der Position der Handhabungsvorrichtung (10) und von Bewegungsdaten der Handhabungsvorrichtung (10) in Form von Messwerten aufweist,
und wobei die Auswerteeinrichtung (18) dazu eingerichtet ist, durch Auswertung der erfassten Messwerte Handlungsanweisungen für die Bedienperson (14) zu erzeugen,
**dadurch gekennzeichnet dass** eine Ausgabeeinrichtung (22) zur Ausgabe der Handlungsanweisungen in Form optischer Signale (29) an die Bedienperson (14) vorgesehen ist,
wobei die Ausgabeeinrichtung (22) ein Anzeigeelement (28) zur Darstellung der Handlungsanweisungen in Form einer Bewegungsbahn (34) für die Handhabung des Gegenstands (12) aufweist.

2. Handhabungsvorrichtung (10) gemäß Anspruch 1, wobei das Anzeigeelement (28) als Display ausgebildet ist.

3. Handhabungsvorrichtung (10) gemäß Anspruch 1 oder 2, wobei das Anzeigeelement (28) zur Ausgabe der Bewegungsbahn (34) durch einen optischen Richtungsvektor ausgebildet ist.

4. Handhabungsvorrichtung (10) nach einem der voranstehenden Ansprüche, **dadurch gekennzeichnet, dass** die Ausgabeeinrichtung (22) an der Handhabungsvorrichtung (10) angeordnet ist.

5. Handhabungsvorrichtung (10) nach einem der voranstehenden Ansprüche, **dadurch gekennzeichnet, dass** die Ausgabeeinrichtung (22) als körpergetragene Ausgabeeinrichtung (22) zum Tragen am Körper der Bedienperson (14) ausgebildet ist.

6. Handhabungsvorrichtung (10) nach einem der voranstehenden Ansprüche, **dadurch gekennzeichnet, dass** mindestens eine Antriebseinrichtung zur Regulierung der Bewegungsgeschwindigkeit einer Handhabung vorgesehen ist.

7. Handhabungsvorrichtung (10) nach einem der voranstehenden Ansprüche, **dadurch gekennzeichnet, dass** eine Identifikationseinrichtung (16) vorgesehen ist, die zur Identifikation der Bedienperson (14) und/oder des Gegenstands (12) eingerichtet ist.

8. Verfahren zum Betreiben einer Handhabungsvorrichtung (10) nach einem der vorstehenden Ansprüche zur Handhabung eines Gegenstands (12) mittels manueller Steuerung durch eine Bedienperson (14), umfassend folgende Schritte:
- Erfassung der Position der Handhabungsvorrichtung (10) und von Bewegungsdaten der Handhabungsvorrichtung (10) in Form von Messwerten,
- Ermittlung von Handlungsanweisungen durch eine Auswertung der erfassten Messwerte,
charakterisiert durch:
Ausgabe der Handlungsanweisungen an die Bedienperson (14) in Form optischer Signale (29) mittels des Anzeigeelements (28) der Ausgabeeinrichtung (22),
wobei eine Bewegungsbahn (34) für die Handhabung des Gegenstands (12) ausgegeben wird.

9. Verfahren nach Anspruch 8, wobei die Bewegungsbahn (34) durch einen optischen Richtungsvektors ausgegeben wird.

10. Verfahren nach Anspruch 8 oder 9, **dadurch gekennzeichnet, dass** vor oder während der Handhabung der Gegenstand (12) und/oder die Bedienperson (14) identifiziert wird.

11. Verfahren nach Anspruch 8 bis 10, **dadurch gekennzeichnet, dass** für die Handhabung des Gegenstands (12) Bedienbefehle vorgegeben werden.

12. Verfahren nach einem der Ansprüche 8 bis 11, **dadurch gekennzeichnet, dass** an die Bedienperson (14) und/oder an die Handhabung des Gegenstands (12) angepasste Bewegungsprofile vorgegeben werden.

13. Verfahren nach einem der Ansprüche 8 bis 12, **dadurch gekennzeichnet, dass** anhand eines Vergleichs erfasster Messwerte (38) einer früheren Handhabung (40) mit aktuellen Messwerten (42) einer weiteren Handhabung (44) ein Ermüdungs- oder Überlastungszustand einer Bedienperson (14) ermittelt wird und/oder dass anhand einer Auswertung der Anzahl an Handhabungen ein Wartungsbedarf der Handhabungsvorrichtung (10) ermittelt wird.

## Claims

1. Handling device (10) for handling an object (12) by means of manual control of the handling device (10) by an operator (14), comprising a sensor apparatus (16) and an evaluating apparatus (18), wherein the sensor apparatus (16) comprises sensors (20) for detecting the position of the handling device (10) and movement data of the handling device (10) in the form of measured values,
and wherein the evaluating apparatus (18) is designed to generate handling instructions for the operator (14) by evaluating the detected measured values,
**characterized in that** an output apparatus (22) is provided for outputting the handling instructions in the form of optical signals (29) to the operator (14),
wherein the output apparatus (22) comprises a display element (28) for displaying the handling instructions in the form of a movement path (34) for the handling of the object (12).

2. Handling device (10) according to claim 1, wherein the display element (28) is configured as a display.

3. Handling device (10) according to claim 1 or 2, wherein the display element (28) is configured to output the movement path (34) by an optical direction vector.

4. Handling device (10) according to either of the preceding claims, **characterized in that** the output apparatus (22) is arranged on the handling device (10).

5. Handling device (10) according to any of the preceding claims, **characterized in that** the output apparatus (22) is a wearable output apparatus (22) for the operator (14) to wear on their body.

6. Handling device (10) according to any of the preceding claims, **characterized in that** at least one drive apparatus is provided for regulating the movement speed of a handling operation.

7. Handling device (10) according to any of the preceding claims, **characterized in that** an identification apparatus (16) is provided which is designed for identifying the operator (14) and/or the object (12).

8. Method for operating a handling device (10) for handling an object (12) by means of manual control by an operator (14), comprising the following steps:
- detecting the position of the handling device (10) and movement data of the handling device (10) in the form of measured values,
- determining handling instructions by evaluating the detected measured values,
**characterized by**:
outputting the handling instructions to the operator (14) in the form of optical signals (29) by means of a display element (28) of an output apparatus (22),
wherein a movement path (34) for the handling of the object (12) is output.

9. Method according to claim 8, wherein the movement path (34) is output by an optical direction vector.

10. Method according to claim 8 or 9, **characterized in that**, before or during the handling operation, the object (12) and/or the operator (14) is identified.

11. Method according to any of claims 8 to 10, **characterized in that** for the handling of the object (12) operating commands are specified.

12. Method according to any of claims 8 to 11, **characterized in that** movement profiles that are adjusted to the operator (14) and/or the handling of the object (12) are specified.

13. Method according to any of claims 8 to 12, **characterized in that**, on the basis of a comparison of detected measured values (38) from an earlier handling operation (40) with current measured values (42) from another handling operation (44), a fatigue state or overload state of an operator (14) is determined, and/or **in that**, on the basis of an evaluation of the number of handling operations, a need for maintenance of the handling device (10) is determined.

## Revendications

1. Dispositif de manipulation (10) destiné à manipuler un objet (12) au moyen d'une commande manuelle du dispositif de manipulation (10) par un opérateur (14), comprenant un dispositif capteur (16) et un dispositif d'évaluation (18), dans lequel le dispositif capteur (16) présente des capteurs (20) pour détecter la position du dispositif de manipulation (10) et saisir des données de mouvement du dispositif de manipulation (10) sous la forme de valeurs de mesure,
et dans lequel le dispositif d'évaluation (18) est conçu pour générer des instructions d'action pour l'opérateur (14) en évaluant les valeurs de mesure saisies,
**caractérisé par le fait qu'**un dispositif de sortie (22) est prévu pour fournir les instructions d'action à l'opérateur (14) sous la forme de signaux optiques (29),
dans lequel le dispositif de sortie (22) présente un élément d'affichage (28) pour afficher les instructions d'action sous la forme d'une trajectoire de mouvement (34) pour la manipulation de l'objet (12).

2. Dispositif de manipulation (10) selon la revendication 1, dans lequel l'élément d'affichage (28) est réalisé en tant qu'écran.

3. Dispositif de manipulation (10) selon la revendication 1 ou 2, dans lequel l'élément d'affichage (28) est conçu pour sortir la trajectoire de mouvement (34) par un vecteur directionnel optique.

4. Dispositif de manipulation (10) selon l'une quelconque des revendications précédentes, **caractérisé par le fait que** le dispositif de sortie (22) est agencé sur le dispositif de manipulation (10).

5. Dispositif de manipulation (10) selon l'une quelconque des revendications précédentes, **caractérisé par le fait que** le dispositif de sortie (22) est conçu en tant que dispositif de sortie (22) porté sur le corps qui est destiné à être porté sur le corps de l'opérateur (14).

6. Dispositif de manipulation (10) selon l'une quelconque des revendications précédentes, **caractérisé par le fait qu'**au moins un dispositif d'entraînement est prévu pour réguler la vitesse de mouvement d'une manipulation.

7. Dispositif de manipulation (10) selon l'une quelconque des revendications précédentes, **caractérisé par le fait qu'**il est prévu un dispositif d'identification (16) qui est conçu pour identifier l'opérateur (14) et/ou l'objet (12).

8. Procédé pour faire fonctionner un dispositif de manipulation (10) selon l'une quelconque des revendications précédentes, destiné à manipuler un objet (12) au moyen d'une commande manuelle par un opérateur (14), comprenant les étapes suivantes consistant à:
- détecter la position du dispositif de manipulation (10) et saisir des données de mouvement du dispositif de manipulation (10) sous la forme de valeurs de mesure,
- déterminer des instructions d'action en évaluant les valeurs de mesure saisies,
**caractérisé par**:
fournir les instructions d'action à l'opérateur (14) sous la forme de signaux optiques (29) au moyen de l'élément d'affichage (28) du dispositif de sortie (22),
dans lequel une trajectoire de mouvement (34) pour la manipulation de l'objet (12) est fournie.

9. Procédé selon la revendication 8, dans lequel la trajectoire de mouvement (34) est fournie par un vecteur directionnel optique.

10. Procédé selon la revendication 8 ou 9, **caractérisé par le fait que** l'objet (12) et/ou l'opérateur (14) est identifié avant ou pendant la manipulation.

11. Procédé selon la revendication 8 à 10, **caractérisé par le fait que** des commandes d'opération sont spécifiées pour manipuler l'objet (12).

12. Procédé selon l'une quelconque des revendications 8 à 11, **caractérisé par le fait que** des profils de mouvement adaptés à l'opérateur (14) et/ou à la manipulation de l'objet (12) sont spécifiés.

13. Procédé selon l'une quelconque des revendications 8 à 12, **caractérisé par le fait qu'**un état de fatigue ou de surcharge d'un opérateur (14) est déterminé à partir d'une comparaison de valeurs de mesure saisies (38) d'une manipulation antérieure (40) à des valeurs de mesure courantes (42) d'une autre manipulation (44) et/ou qu'un besoin de maintenance du dispositif de manipulation (10) est déterminé à partir d'une évaluation du nombre de manipulations.
